# EUROPEAN PATENT SPECIFICATION

(11) **EP 2 693 128 B1**
(45) Date of publication and mention of the grant of the patent: **12.02.2020**
(21) Application number: 13396008.8
(22) Date of filing: 01.08.2013
(51) Int. Cl.: F24D 3/14, E04B 1/70, E04C 2/52, F24D 5/10

(54) **Heating and drying system for a building**
Heiz- und Trocknungssystem für ein Gebäude
Système de chauffage et de séchage pour un bâtiment

(30) Priority: 01.08.2012 FI 20120242
(43) Date of publication of application: 05.02.2014
(73) Proprietor: Lehtimäki, Pasi, 37800 Toijala (FI); Tommola, Esa, 33560 Tampere (FI)
(72) Inventor: Lehtimäki, Pasi, 37800 Toijala (FI)
(74) Representative: Kolster Oy Ab

(56) References cited:
- EP-A1- 0 122 199
- WO-A1-00/29679
- WO-A1-00/40903
- CA-A1- 2 163 468

## Description

The object of the invention is a heating and drying system for a building according to the preamble of claim 1.

A heating system of interior spaces which is organized through a concrete base floor is previously known from a Swedish published application no 9301473-6. In this solution heated air is blown along air pipes which are located in concrete pouring and temperature of the concrete base floor is risen in this way so that the base floor contributes also to the heating of a room which is located above it. In the solution outdoor air is taken to be circulated which outdoor air is heated before it is directed to circulate in the pipings of the base floor. This air is heated also after it has been removed from the pipings of the base floor because it is being directed further in order to heat the rooms. The pipings of the base floor are tight and neither moisture nor impurities can access the air from there. Further a method for heating a floor and removing moisture from there is known from the publication WO 00/40903 in which case circulation cycle is used in the method in which circulation cycle air is heated with the help of a heating device and the moisture included in the recirculated air is removed by drying the recirculated air with the help of a cooling heat exchanger, such as with a heat exchanger which belongs to a heat pump.

A solution according to the above mentioned publication SE-9301473-6 dries the concrete base floor merely with the help of heating effect. Due to heating the moisture aims to go around in the concrete structure of the base floor towards a colder state. The heating pipes are the warmest parts so that the moisture becomes removed next to them. Mainly the moisture moves to a colder space underneath the base floor into a gravel and a bedding for a distance and stays there. The moisture cannot be removed from there anymore but it may become a permanent disadvantage for the underside of the base floor. It is hard to predict its coming impacts. On the other hand, if drying is started in this way not until there is a tiling or for example a parquette on top of the base floor concreting, these drifts of the moisture which damage coatings may be created.

In the method according to the publication WO 00/40903 open channels and wide hole spaces which are formed underneath the floor surface are used the forming of which open channels and wide hole spaces into the base floor structure is considerably difficult. For example the conventional concrete pouring for the base floor cannot be used.

Also earlier is known a method for circulating air in the concrete slab from publication WO 00/29679 which disclose a concrete slab with internally cast ducts for circulating gas, preferably air. The ducts are arranged in a predetermined spaced-apart relationship over the extent of the concrete slab. The ducts communicate directly with the surrounding concrete to allow migration of substances from the concrete into the ducts.

The solution above does not comprise the inventive cover as defined in the characterizing part of claim 1.

In order to remove these disadvantages a new heating and drying system has been developed comprising the characterizing features of claim 1.

One advantage of the invention is the fact that the moisture will not go around to the same extent from a concrete base floor towards colder spaces as in the known solutions when the moisture in the form of water vapour or being absorbed into the mass can move in different ways to become part of the dry air which moves in the pipes through the walls of the heating pipes. The water vapour has less partial pressure in the dry air which moves in the pipes than in the moist concrete mass in which case water vapour can be made to move towards lesser partial pressure into the pipings. Several different heat sources which heat the recirculated air can be used for drying and heating and they can also be used simultaneously. The amount of the air which has been taken from outside can be adjusted and air can be removed from the circulation cycle with the help of heat recovery.

In the following the invention is described by referring to the accompanying drawings in which
Figure 1 shows a floor heating piping which stays inside the concrete pouring regarding a room.
Figure 2 shows a concrete base floor as a section view which concrete base floor has heating pipings.
Figure 3 shows an embodiment of the invention showing a part of the piping and a structure with holes within and a cover.
Figure 4 shows a part of a piping as a section view.
Figure 5 shows schematically a drying/heating system of the base floor.
Figure 6 shows channels which are located inside the concrete pouring.
Figure 7 shows a concrete pipe.

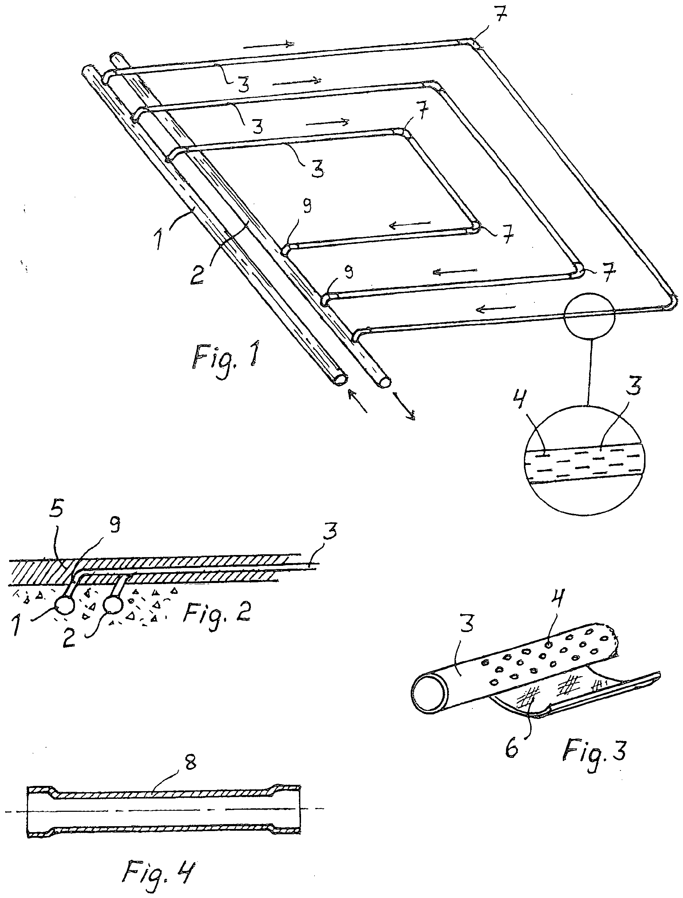

A piping 3 which circulates heating air through the concrete base floor is presented in the figure 1. The air distribution is organized by using the main channel 1 and return flows are also correspondingly gathered to the main channel 2. Both main channels 1 and 2 are at the lower level in relation to the pipings 3. The main channels 1 and 2 are located underneath the concrete tile 5 in the filling paste according to the figure 2 and the pipings 3 are lifted to the higher level with the help of curves 9 and they are located inside the concrete tile 5. The piping 3 can consist of various pipe units. In the figure 1 bended points are arranged by using separate flow elbows 7. The piping 3 can be arranged to have a connection with air with the concrete tile 5 for example such as the enlargement of the detail of the figure 1 shows. The piping 3 thus comprises passage incisions 4 through which passage incisions the concrete mass to be poured cannot access but a connection from the concrete tile 5 into the pipe 3 exists after the concreting. The width of the incisions is for example 1 - 3 mm and the length in direction of the pipe 3 is for example 50 - 100 mm. These kind of parts are located to the piping 3 with suitable spacings or the piping 3 can comprise holes like these regarding its whole length.

An embodiment of the inventive solution is shown in the figure 3 in which the holes 4 in the piping 3 are bigger, so big regarding their diameter, for example more than 4 mm that during the concreting the concrete would go through them. This is why a cover 6 which lets air and moisture through, such as a nonwoven fabric, a porous mat or a flexible plastic board with open cells, is wrapped to these locations around the piping 3.

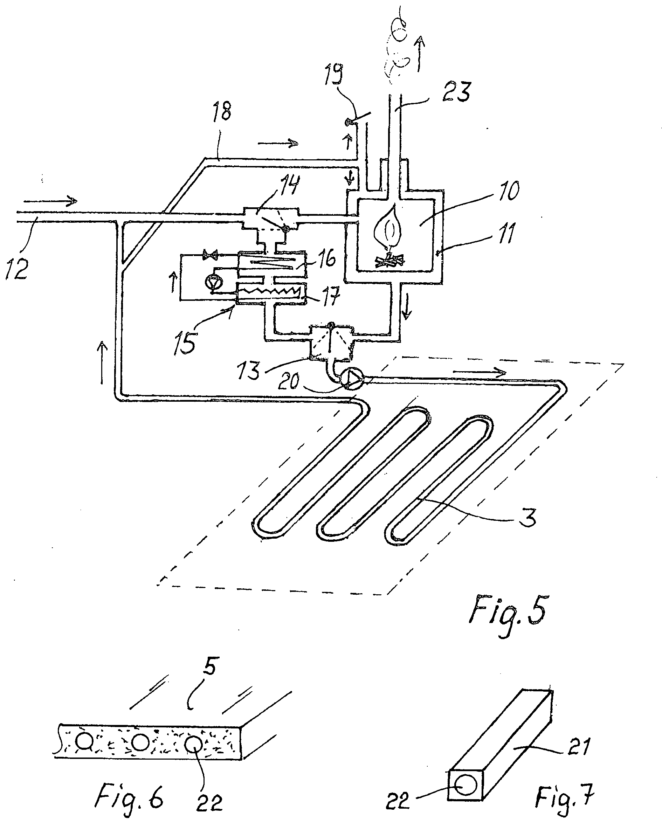

Certain alternatives which do not fall within the wording of claim 1 are shown in the figures 4, 6 and 7 in which case there is a porous pipe 8 in the figure 4 which pipes are located in the piping 3 with a needed density. Also the elbow pipes 9 and flow elbows 7 can be made of this kind of material. As a porous piece 7, 9 one can use pieces which are casted even from a porous concrete, aerated concrete or cellular concrete and pieces which are shown in the figure 7.

There is a concrete hollow concreting 5 in the figure 6 in which hollow concreting there are recirculated air channels 22 which are formed during the concreting.

The figure 5 shows a circulation cycle arrangement according to the invention which dries/heats the base floor in which arrangement many alternatives in order to circulate, heat and dry the recirculated air are shown. The system functions also well also with less air circulation possibilities.

According to the invention the air which is blown into the piping 3 can be taken from outside from the channel 12, can be heated with a furnace 10 or with a heat pump, 15 and can be removed outwards for example partly or totally from a discharge channel 18 when the shut-off valve 19 is opened or can be totally directed to be combustion air of the furnace 10 or only a part of it can be circulated. With the help of adjustable distributing valves 13 and 14 the flow of the recirculated air can be controlled between the heating devices 10 and 15 when there are several of them. The system can also comprise an electrical heating radiator for example being connected in series between the heat pump 15 and a distributing valve, 13. The heat pump 15 comprises an evaporator 16 and a condenser 17. The recirculated air flows through these in which case the evaporator 16 cools the air while being cold and water condensates from the air for the evaporator 16 when the air dries out. After this the condenser 17 heats the air as much as it is possible with its power.

The air to be blown into the piping 3 can be taken from outside or it can be air that must be removed from an apartment which air is heated for example with a furnace 10 which is equipped with an iron core with wood heating in the interspace 11 of the furnace in which case no uncontrolled ventilation will occur. The air is directed to the piping 3 with the help of a blower both during the drying time and later when it is meant to be heated usually in the temperature of 40° - 50°C. When moisture becomes mixed with the air during the drying time, the air which has come out of the piping 3 is directed outwards for example from a blow pipe 18 through a valve 19 or it is removed in the furnace 10 being used as a combustion air out of a chimney 23. If drying of the floor concreting occurs during the winter time, the replacement air which is to be taken into the building can be pre-heated with the air which has to be removed from the piping 3 by using such known heat exchangers or heat pumps. After this the dried air can be circulated back into the furnace to be heated and can be blown into the piping 3.

When drying is no longer performed as an actual procedure, the same air can be circulated in the system and the floor can be heated through the piping 3. The ventilation of the air must however be maintained to a certain extent.

The air to be directed to the piping 3 can be heated with heat pumps, electricity and other known ways of heating. The air to be directed to the piping 3 is not directed inside the apartment to be indoor air. However, energy can be captured from it for example with a heat pump if it is being directed outwards.

## Claims

1. Heating and drying system for a building, wherein the system comprises a heating circulation cycle and concrete structures, such as base floors (5) which give away heat for the heating of the building and which concrete structures also require drying, wherein the system is configured such that heated air is directed to the concrete structures to be dried and/or heated such that the moisture has a chance to move from the concrete structure to be dried to be part of the heated air, and the system further comprising pipes (3) and being configured such that the heated air is directed to the concrete structures through the pipes (3) which are located in the concrete structures, wherein the walls of the pipes (3) comprise holes (4), wherein the moisture can move from the concrete structure into the pipes (3) and to the heating circulation cycle, the system further comprising a heating device (10) configured to heat the heated air, **characterized in that**
the system is configured to reduce the moisture included in the recirculated heated air by directing all or a part of the recirculated heated air outwards the heating circulation cycle and by taking new air from outside of the heating circulation cycle to replace the removed air,
the system is further configured to direct the recirculated heated air to be directed outwards the heating circulation cycle to be combustion air of the heating device (10), and
the system further comprising a cover (6) being wrapped at least around the part of the pipes (3) which comprises the holes (4), said cover (6) being configured to coat or cover at least the part of the pipes (3) which comprises the holes (4) and configured to let air through at least regarding the part of the pipes (3) which comprises the holes (4).

2. A system according to the claim 1, **characterized in that** the heating device is a furnace (10).

3. A system according to the claim 1, **characterized in that** it comprises one distributing valve or several distributing valves (13), (14) in order to direct the recirculated air in various ways and as various parts through heating and/or drying devices (10), (15).

4. A system according to the claim 1, **characterized in that** the cover (6) is made of a nonwoven fabric, a porous material, or a flexible plastic board with open cells.

5. A system according to the claim 1, **characterized in that** a diameter of the holes (4) in the piping (3) is more than 4 mm.

## Patentansprüche

1. Heiz- und Trockensystem für ein Gebäude, wobei das System einen Heizkreislaufzyklus und Betonstrukturen umfasst, wie etwa Grundböden (5), die Wärme für die Heizung des Gebäudes abgeben, und wobei die Betonstrukturen außerdem eine Trocknung erfordern, wobei das System derart ausgelegt ist, dass erwärmte Luft zu den Betonstrukturen, die zu trocknen und/oder zu erwärmen sind, geleitet wird, derart, dass die Feuchtigkeit Gelegenheit hat, sich von der Betonstruktur, die zu trocknen ist, zu bewegen, um Teil der erwärmten Luft zu sein, und das System ferner Rohre (3) umfasst und derart ausgelegt ist, dass die erwärmte Luft durch die Rohre (3), die sich in den Betonstrukturen befinden, zu den Betonstrukturen geleitet wird, wobei die Wände der Rohre (3) Löcher (4) umfassen, wobei sich die Feuchtigkeit von der Betonstruktur in die Rohre (3) und zum Heizkreislaufzyklus bewegen kann, wobei das System ferner eine Heizvorrichtung (10) umfasst, die dazu ausgelegt ist, die erwärmte Luft zu erwärmen, **dadurch gekennzeichnet, dass**
das System dazu ausgelegt ist, durch Leiten der gesamten oder eines Teils der rezirkulierten erwärmten Luft aus dem Heizkreislaufzyklus nach außen und durch Aufnehmen von neuer Luft von außerhalb des Heizkreislaufzyklus, um die entfernte Luft zu ersetzen, die Feuchtigkeit, die in der rezirkulierten erwärmten Luft beinhaltet ist, zu reduzieren,
das System ferner dazu ausgelegt ist, die vom Heizkreislaufzyklus nach außen zu leitende rezirkulierte erwärmte Luft derart zu leiten, dass sie Verbrennungsluft der Heizvorrichtung (10) ist, und
wobei das System ferner eine Abdeckung (6) umfasst, die mindestens um den Teil der Rohre (3) gewickelt ist, der die Löcher (4) umfasst, wobei die Abdeckung (6) dazu ausgelegt ist, mindestens den Teil der Rohre (3), der die Löcher (4) umfasst, zu umschließen oder abzudecken, und dazu ausgelegt, mindestens hinsichtlich des Teils der Rohre (3), der die Löcher (4) umfasst, Luft durchzulassen.

2. System nach Anspruch 1, **dadurch gekennzeichnet, dass** die Heizvorrichtung ein Ofen (10) ist.

3. System nach Anspruch 1, **dadurch gekennzeichnet, dass** es ein Verteilungsventil oder mehrere Verteilungsventile (13), (14) umfasst, um die rezirkulierte Luft auf unterschiedlichen Wegen und als unterschiedliche Teile durch Heiz- und/oder Trockenvorrichtungen (10), (15) zu leiten.

4. System nach Anspruch 1, **dadurch gekennzeichnet, dass** die Abdeckung (6) aus einem Vliesstoff, einem porösen Material oder einer flexiblen Kunststoffplatte mit offenen Zellen besteht.

5. System nach Anspruch 1, **dadurch gekennzeichnet, dass** ein Durchmesser der Löcher (4) in den Rohren (3) mehr als 4 mm beträgt.

## Revendications

1. Système de chauffage et de séchage pour un bâtiment, dans lequel le système comprend un cycle de circulation de chauffage et des structures en béton, tels que des planchers de base (5) qui dégagent de la chaleur pour le chauffage du bâtiment et lesquelles structures en béton nécessitent également le séchage, dans lequel le système est configuré de sorte que l'air chauffé est dirigé vers les structures en béton à sécher et/ou à chauffer de sorte que l'humidité a une chance de s'éloigner de la structure en béton à sécher pour faire partie de l'air chauffé, et le système comprenant en outre des tuyaux (3) et étant configuré de sorte que l'air chauffé est dirigé vers les structures en béton par le biais de tuyaux (3) qui sont positionnés dans les structures en béton, dans lequel les parois des tuyaux (3) comprennent des trous (4), dans lequel l'humidité peut passer de la structure en béton dans les tuyaux (3) et dans le cycle de circulation de chauffage, le système comprenant en outre un dispositif de chauffage (10) configuré pour chauffer l'air chauffé, **caractérisé en ce que** :
le système est configuré pour réduire l'humidité incluse dans l'air chauffé recirculé en dirigeant tout ou une partie de l'air chauffé recirculé à l'extérieur du cycle de circulation de chauffage et en prenant de l'air frais de l'extérieur du cycle de circulation de chauffage afin de remplacer l'air extrait,
le système est en outre configuré pour diriger l'air chauffé recirculé à diriger vers l'extérieur du cycle de circulation de chauffage pour être de l'air de combustion du dispositif de chauffage (10), et
le système comprenant en outre un couvercle (6) enroulé au moins autour d'une partie des tuyaux (3) qui comprend les trous (4), ledit couvercle (6) étant configuré pour revêtir ou recouvrir au moins la partie des tuyaux (3) qui comprend les trous (4) et configuré pour laisser passer l'air au moins concernant la partie des tuyaux (3) qui comprend les trous (4) .

2. Système selon la revendication 1, **caractérisé en ce que** le dispositif de chauffage est un four (10).

3. Système selon la revendication 1, **caractérisé en ce qu'**il comprend une valve de distribution ou plusieurs valves de distribution (13), (14) afin de diriger l'air recirculé de différentes manières et dans différentes parties par le biais des dispositifs de chauffage et/ou de séchage (10), (15).

4. Système selon la revendication 1, **caractérisé en ce que** le couvercle (6) est réalisé avec un tissu non tissé, un matériau poreux ou une plaque en plastique flexible avec des cellules ouvertes.

5. Système selon la revendication 1, **caractérisé en ce qu'**un diamètre des trous (4) dans le tuyau (3) est supérieur à 4 mm.
